# EUROPÄISCHE PATENTSCHRIFT

(11) **EP 1 996 652 B1**
(45) Veröffentlichungstag und Bekanntmachung des Hinweises auf die Patenterteilung: **15.06.2016**
(21) Anmeldenummer: 07727097.3
(22) Anmeldetag: 20.03.2007
(51) Int. Cl.: C08L 23/00, C08L 83/00, C08L 97/02

(54) **SILANISIERUNG VON HOLZSPÄNEN UND -FASERN ZUR HERSTELLUNG VON HOLZ-PLASTIK-KOMPOSITWERKSTOFFEN**
SILANIZATION OF WOOD TURNINGS AND FIBERS FOR PRODUCING WOOD-PLASTIC COMPOSITE MATERIALS
SILANISATION DE COPEAUX ET DE FIBRES DE BOIS POUR LA FABRICATION DE MATERIAUX COMPOSITES BOIS-PLASTIQUE

(30) Priorität: 20.03.2006 DE 102006013090
(43) Veröffentlichungstag der Anmeldung: 03.12.2008
(73) Patentinhaber: Evonik Degussa GmbH, 45128 Essen (DE)
(72) Erfinder: MILITZ, Holger, 37120 Bovenden (DE); MAI, Carsten, 37075 Göttingen (DE); JENKNER, Peter, 46485 Wesel (DE); EDELMANN, Roland, 79618 Rheinfelden (DE); STANDKE, Burkhard, 79540 Lörrach (DE); MICHEL, Peter, 95028 Hof (DE); BERGMANN, Jens-Uwe, 95111 Rehau (DE); SCHMIDT, Steven, 95182 Döhlau (DE)
(86) Internationale Anmeldenummer: PCT/EP2007/052620
(87) Internationale Veröffentlichungsnummer: WO 2007/107551

(56) Entgegenhaltungen:
- EP-A2- 0 716 127
- EP-A2- 0 716 128
- WO-A-2005/080498
- WO-A-2006/010667
- US-B1- 6 255 513
- US-B1- 6 403 228

## Beschreibung

Die vorliegende Erfindung betrifft Kompositwerkstoffe aus Holz und thermoplastischen Kunststoffen, bei denen lignocellulosisches Material wie Holz in Form von Partikeln, beispielsweise als Holzmehl, Holzfasern oder Holzschnitzel, in Mischung mit einem thermoplastischen Kunststoff einen Komposit- oder Verbundwerkstoff bildet. Weiterhin betrifft die vorliegende Erfindung ein Verfahren zur Herstellung eines Kompositwerkstoffs aus lignocellulosischem Material und thermoplastischem Kunststoff.

### Stand der Technik

Die US 4717742 beschreibt gattungsgemäße, holzverstärkte thermoplastische Verbundwerkstoffe aus Holzzellstoff und Polyethylen oder isotaktischem Polypropylen, wobei der Kunststoff jeweils Maleinsäureanhydrid enthält. Zur Verbesserung der Haftung zwischen lignocellulosischen Fasern einerseits sowie Kunststoff andererseits werden die lignocellulosischen Fasern mit γ-Aminopropyltriethoxysilan in Lösungsmittel behandelt, das Lösungsmittel abdampfen gelassen und bei 105 °C getrocknet. Das Maleinsäureanhydrid dient als Kopplungsmittel zwischen den silanisierten Cellulosefasern und dem Kunststoff.

Die WO 2005/080498 A1 beschreibt Komposite, die neben Polypropylen oder Polyethylen auf deren maleinsäureanhydrid-modifizierten Derivate sowie anorganische oder organische Füllstoffe und zumindest ein Aminosilan oder Aminosiloxan enthalten.

Die US 6,255,513 B1 beschreibt eine Zusammensetzung wasserlöslicher Organosiloxane, zur Silanisierung von Füllstoffen und Pigmenten. Die Zusammensetzung enthält ein wasserlösliches Amino-Alkoxysilan sowie zumindest ein wasserunlösliches Alkenyl-Alkoxysilan.

Die US 6,403,228 B1 beschreibt die Verwendung funktionalisierter Organopolysiloxane auf einem Trägermaterial in Verbindungen zur Verwendung in Kabeln. Die Verbindungen enthalten flüssiges funktionalisiertes Organopolysiloxan, das auf einem Trägermaterial immobilisiert ist, sowie ein thermoplastisches Polymer mit polaren funktionalen Gruppen und ein mineralisches Füllmaterial.

Die WO 2006/010667 A1 beschreibt siliciumhaltige Verbindungen zur Behandlung cellulose- und/oder stärkehaltiger Substrate, die den Substraten neben wasserabweisenden Eigenschaften auch antimykotische, antibakterielle und/oder insektenabweisende Eigenschaften verleihen sollen.

### Aufgabe der Erfindung

Gegenüber den bekannten Kompositwerkstoffen aus thermoplastischem Kunststoff und lignocellulosischen Fasern stellt sich der vorliegenden Erfindung die Aufgabe, einen gattungsgemäßen Verbundwerkstoff mit verbesserten Eigenschaften bereitzustellen.

Insbesondere stellt sich der vorliegenden Erfindung die Aufgabe, einen Kompositwerkstoff aus thermoplastischem Kunststoff und lignocellulosischem Material bereitzustellen, der verbesserte mechanische Eigenschaften aufweist, beispielsweise eine höhere Kerbschlagzähigkeit, ein verbessertes E-Modul, sowie eine höhere Zugfestigkeit und, bevorzugterweise, eine verringerte Wasseraufnahme.

Eine weitere Aufgabe ist die Bereitstellung eines Verfahrens zur Herstellung des Kompositwerkstoffs, das im Wesentlichen ohne organisches Lösungsmittel ausgeführt werden kann.

### Allgemeine Beschreibung der Erfindung

Die Erfindung löst die vorgenannten Aufgaben dadurch, dass lignocellulosische Fasern durch Behandlung mit Silanen derivatisiert werden, die einerseits eine haftvermittelnde Wirkung zwischen lignocellulosischen Fasern und thermoplastischem Kunststoff herstellen, andererseits die lignocellulosischen Fasern hydrophobieren.

Im bevorzugten Verfahren wird ein oligomeres Kondensationsprodukt verschiedener Silane, nachfolgend als Organopolysiloxan bezeichnet, das als Haftvermittler und als Hydrophobierungsmittel dient, in wässriger Lösung mit den lignocellulosischen Fasern kontaktiert, so dass im Wesentlichen keine organischen Lösungsmittel eingesetzt werden.

Weiterhin werden im Anschluss an die Behandlung mit dem Silangemisch die lignocellulosischen Fasern getrocknet und einer Erwärmung von ca. 80 - 120 °C, bevorzugt ca. 100 - 105 °C unterworfen. Diese Trocknung und Erwärmung kann ein- oder mehrstufig ausgeführt werden, z.B. als Vortrocknung bei 40 °C und Aushärten bei 120 °C.

Der Gehalt an lignocellulosischen Fasern beträgt in erfindungsgemäßen Kompositwerkstoffen beispielsweise 10 bis 90 Gew.-%, wobei als lignocellulosische Fasern Holzmehl, Holzspäne und/oder Holzschnitzel aus Laub- oder Nadelhölzern und Gemische daraus eingesetzt werden können. Als Kunststoff, der vorzugsweise thermoplastisch ist, eignen sich insbesondere Polyolefine, Polyethylen, Polypropylen, vorzugsweise isotaktisches Polypropylen, Blockcopolymere und Mischpolymere aus Polyethylen- und Propyleneinheiten, PVC, Polystyrol, Acrylonitril-butadien-styrol (ABS) oder Melaminharz. Besonders bevorzugt ist der Kunststoff nicht mit funktionalen Gruppen derivatisiert oder versehen, beispielsweise nicht mit Carbonsäuregruppen.

### Genaue Beschreibung der Erfindung

Lignocellulosische Fasern werden erfindungsgemäß durch eine Behandlung mit Organopolysiloxanen bzw. deren Copolymerisaten in einer Mischung auf Wasserbasis umgesetzt. Im Ergebnis wird die Haftvermittlung zwischen lignocellulosischen Fasern und thermoplastischem Kunststoff im Kompositwerkstoff verbessert. Dadurch werden sowohl die mechanisch-physikalischen Eigenschaften des Kompositwerkstoffs verbessert als auch die Aufnahme von flüssigem und gasförmigem Wasser reduziert.

Die erfindungsgemäß einzusetzenden Organopolysiloxane sind erhältlich durch Mischen wasserlöslicher Aminoalkyl-Alkoxysilane, die die allgemeine Formel I

R-Si(R¹)_{y}(OR^{1*})_{3-y} (I)

aufweisen, mit nicht wasserlöslichen Alkyltrialkoxysilanen, die die allgemeine Formel II

R²-Si(OR^{1**})3 (II)

aufweisen, optional zusätzlich in Kombination mit nicht wasserlöslichen Dialkyldialkoxysilanen der allgemeinen Formel III

AA'-Si(OR¹***)₂ (III).

Dabei ist R eine amino funktionale Gruppe, aliphatisch verzweigt oder unverzweigt oder aromatisch mit 2 bis 8 Kohlenstoffatomen, die primäre, sekundäre, tertiäre, bevorzugt quartäre aliphatische oder aromatische Aminogruppen enthält oder die allgemeine Formel IV aufweisen kann:

[Z_{(f+g+h)}]^{(f+g+h)-}[NH_{2+f}(CH₂)_{b}(NH_{g+1})_{c}(H₂)_{d}(NHₕ₊₁)ₑ(CH₂)ᵢ]^{(f+g+h)+} (IV),

bei der 0 ≤ b ≤ 3; 0 ≤ d ≤ 3; 0 ≤ i ≤ 3; 0 ≤ f ≤ 1; 0 ≤ g ≤ 1; 0 ≤ h ≤ 1; 0 ≤ c ≤ 1; 0 ≤ e ≤ 1 und b + d + i ≠ 0 ist, für b = 0 auch c = 0 ist, für d = 0 auch e = 0 ist, für i = 0 auch e = 0 ist und für d = i = 0 auch c = 0 ist. Dabei ist Z ein einwertiger anorganischer oder organischer Säurerest. R¹, R^{1*}, R^{1**} und R^{1***} sind unabhängig ein Methyl- oder Ethylrest, R² ein linearer, zyklischer oder verzweigter Alkylrest mit 1 bis 8 Kohlenstoffatomen, A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist und 0 ≤ y ≤ 1 ist. Vorzugsweise beträgt das Molverhältnis von Verbindungen der Formel I zur Summe derjenigen der Formeln II und III zwischen 0 und 2.

In bevorzugter Ausführungsform ist das wasserlösliche Aminoalkylalkoxysilan 3-Aminopropyltriethoxysilan und das wasserunlösliche Alkyltrialkoxysilan Isobutyltrialkoxysilan.

Das Organopolysiloxan, das aus wasserlöslichem Aminoalkylalkoxysilan und zumindest einem wasserunlöslichen Alkyltrialkoxysilan, optional mindestens einem weiteren wasserunlöslichen Dialkyldialkoxysilan besteht, wird vorzugsweise unter Säurekatalyse hergestellt. Dabei bedeutet Säurekatalyse vorzugsweise, dass der pH einen Wert zwischen 1 bis 8 aufweist, bevorzugter 3 bis 5. Das Organopolysiloxan kann daher als Kondensationsprodukt aus zumindest einem wasserlöslichen Aminoalkylalkoxysilan und zumindest einem wasserunlöslichen Alkyltrialkoxysilan, optional mindestens einem weiteren wasserunlöslichen Dialkyldialkoxysilan definiert werden. Das Organopolysiloxan kann daher auch als Kondensationsprodukt des unter Säure- oder Basekatalyse hydrolysierten zumindest einen wasserlöslichen Aminoalkylalkoxysilans und des zumindest einen wasserunlöslichen Alkyltrialkoxysilans beschrieben werden. Die Anzahl der Silaneinheiten im Organopolysiloxan, die in der Regel in einer Verteilung bzw. in einem Gemisch vorliegt, umfaßt vorzugsweise eine mittlere Verteilung von 5 bis 20, bevorzugter 10 bis 18, besonders bevorzugt 15 Siloxaneinheiten. Auf diese Weise kann ein bevorzugter Oligomerisierungsgrad des Organopolysiloxans beschrieben werden. Die Herstellung eines bevorzugten Organopolysiloxans kann EP 0 716 128 oder der EP 0 716 127 entnommen werden.

In besonders bevorzugter Ausführungsform wird das Organopolysiloxan auf Wasserbasis im Wesentlichen frei von Alkoholen eingesetzt, wobei das Organopolysiloxan herstellbar ist durch Mischen des wasserlöslichen Aminoalkoxysilans mit dem wasserunlöslichen Dialkyldialkoxysilan in Wasser, Einstellen des pH-Werts auf einen Wert zwischen 1 und 8, vorzugsweise 3 bis 5 und Entfernen von Alkohol, vorzugsweise durch Vakuumdestillation hergestellt. Für die Säurekatalyse bzw. zum Einstellen des pH-Werts können anorganische oder organische Säuren eingesetzt werden, vorzugsweise Ameisensäure oder Essigsäure. Eine bevorzugte, wasserbasierte Organopolysiloxan-Zusammensetzung ist aus EP 0 716 128 A2 bekannt und unter dem Namen Dynasilan® von der Degussa AG, Deutschland, erhältlich.

Es ist bevorzugt, dass die Behandlung der lignocellulosischen Fasern über eine längere Zeitdauer stattfindet, beispielsweise über zwei Stunden unter Bewegung. Es ist bevorzugt, dass die Silanisierung der lignocellulosischen Fasern bei von ca. 40 bis 70 °C, bevorzugt 40 °C durchgeführt wird, was zu einer Erhöhung der in das lignocellulosische Material eingetragenen Menge an Organopolysiloxan führt. Weiterhin ist bevorzugt, dass eine wässrige Formulierung der erfindungsgemäßen Organopolysiloxane bei der Behandlung einen pH von 3 bis 4 aufweist, beispielsweise durch Ameisensäure eingestellt, und durch längeres Mischen der wässrigen Gebrauchslösung vollständig hydrolysiert ist.

Alternativ kann eine organopolysiloxanhaltige Zusammensetzung, vorzugsweise auf Wasserbasis, hergestellt werden durch Mischen wasserlöslicher Aminoalkylalkoxysilane der allgemeinen Formel I

R-Si(R¹)_{y}(OR^{1*})_{3-y} (I)

im molaren Verhältnis von > 0 bis maximal 2 mit nicht wasserlöslichen Aminoalkoxysilanen der allgemeinen Formel II

R²-Si(OR^{1**})₃ (II),

wobei R eine aminofunktionelle organische Gruppe der allgemeinen Formel V

[Z_{(f+c·f*)}]^{(f+c·f*)-}[A_{d}NH⁻_{(2+f-d)} [(CH₂)ₐNA¹ₑH⁻_{(1-e+f)}]_{c}(CH₂)_{b}⁻]^{(f+c-f*)+} (V),

darstellt, bei der 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1 ist,
A und A¹ einen Benzyl- oder Vinylbenzylrest darstellen, N Stickstoff ist und Z ein einwertiger anorganischer oder organischer Säurerest ist, z.B. ausgewählt aus der Gruppe, die Cl⁻, NO₃⁻, HCOO⁻, CH₃COO, R1, R1** und R** umfaßt,
wobei R¹, R^{1*} und R¹** einen Methyl- oder Ethylrest und
R² einen linearen, cyclischen oder verzweigten Alkylrest mit 1 bis 6 Kohlenstoffatomen oder eine Ureido-Alkylgruppe der allgemeinen Formel VI darstellt

   NH₂-CO-NH-(CH₂)_{b}- (VI)
und 0 ≤ y ≤ 1 ist,
anschließendes Versetzen des Gemischs mit Wasser,
Einstellen des pH-Werts auf einen Wert zwischen 1 und 8, und
Entfernen des vorhandenen und/oder bei der Umsetzung entstehenden Alkohols.

Die Erfindung wird nun genauer mit Bezug auf die Figuren beschrieben, in denen
- Figur 1 die Gewichtszunahme von Fichtenholzspänen nach der Behandlung mit verschiedenen Organopolysiloxanen in Abhängigkeit von der Trocknungstemperatur zeigt und
- Figur 2 mit verschiedenen Organopolysiloxanen behandelte Holzspäne im Schwimmtest nach 48 Stunden zeigt.

### Beispiel 1: Behandlung von lignocellulosischen Fasern mit Organopolysiloxanen

Als Beispiel für lignocellulosische Fasern wurden Fichtenholzspäne mit verschiedenen Silanen in Wasser, zur Kontrolle nur in Wasser, suspendiert und gerührt. Dabei wurden die Organopolysiloxane vor Zugabe der Fichtenholzspäne zu einer Konzentration von 3 Gew.-% in Wasser, mit einem Zusatz an Essigsäure auf pH 4 eingestellt, angesetzt und für 30 Minuten gerührt, um eine vollständige Hydrolyse zu gewährleisten. Dabei wurde beobachtet, dass die zunächst entstandene Emulsion zu einer klaren Lösung wurde. Zu dieser Lösung wurden 40 g Späne (10,2 % Feuchtigkeit) gegeben und für 2 Stunden im Horizontalschüttler geschüttelt, anschließend abfiltriert.

Für die Organopolysiloxane wurden Methyltriethoxysilan (Dynasilan MTES), 3 - Glycidyloxypropyltrimethoxysilan (Dynasilan GLYMO), Propyltriethoxysilan (Dynasilan PTEO), Vinyltrimethoxysilan (Dynasilan VTMO) sowie 3 - Aminopropyltriethoxysilan (Dynasilan AMEO) verwendet. Die Organopolysiloxane mit der Bezeichnung Dynasilan sind von der Degussa AG, Marl, Deutschland, erhältlich.

Aliquots wurden bei 25 °C, 60 °C bzw. 103 °C über 72 Stunden getrocknet. Anschließend wurden die Späne bei 20 °C und 25 % relativer Feuchte bis zur Gewichtskonstanz klimatisiert und gewogen. Von jeder Probe wurde das Trockengewicht bzw. die Feuchte durch Trocknen bei 103 °C und Wiegen bestimmt.

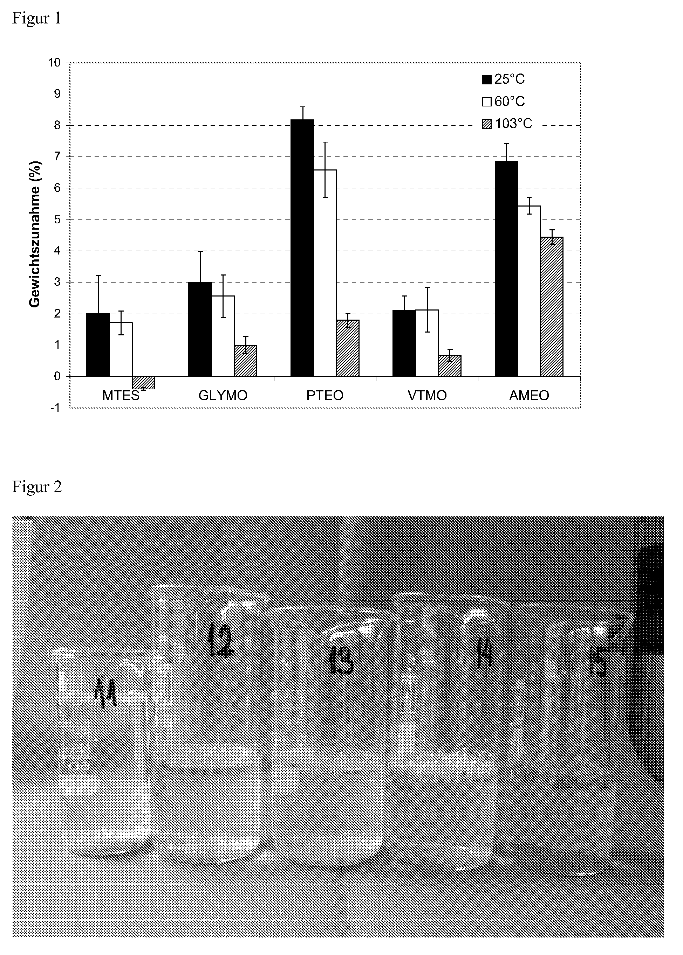

Die Ergebnisse der Gewichtszunahme von Fichtenholzspänen sind in Figur 1 dargestellt, wobei deutlich wird, dass bei der Trocknung bei 20 °C und 65 °C keine nennenswerten Silanmengen auf die Späne aufgezogen sind, die einer Temperaturbehandlung von 103 °C zur Trockengewichtsbestimmung standhalten. Dies wird darauf zurückgeführt, dass bei niedrigeren Temperaturen keine oder nur eine geringere Kondensation der Silane eintrat und diese sich während der anschließenden Trocknung bei 103 °C verflüchtigten. Daher werden die lignocellulosischen Fasern im Anschluss an die Kontaktierung mit Organopolysiloxanen durch Erwärmen auf eine Temperatur bei oder oberhalb von 80 °C behandelt.

Der Gewichtsverlust der Kontrollspäne, die nur in Wasser ohne Organopolysiloxan behandelt wurden, lag bei 1,0 % (103 °C).

In Figur 1 wird deutlich, dass mit Ausnahme von MTES alle eingesetzten Organopolysiloxane auch bei einer Trocknung bei 103 °C zu einer Gewichtszunahme der Fichtenholzspäne führten.

### Beispiel 2: Haftvermittlung und Hydrophobierung lignocellulosischer Fasern

Entsprechend Beispiel 1 behandelte Fichtenholzspäne wurden in Wasser suspendiert und für 48 Stunden stehengelassen. Dieser so genannte Schwimmtest ist in Figur 2 dargestellt und macht deutlich, dass die stärkste Hydrophobierung mit Organopolysiloxan aus Vinyltrimethoxysilan (Dynasilan VTMO), gefolgt von 3-Aminopropyltriethoxysilan (Dynasilan AMEO) erzielt wurde.

Mit Organopolysiloxan aus Dynasilan VTMO bzw. Dynasilan AMEO silanisierte Fichtenholzspäne, sowie mit Wasser behandelte Kontrollspäne wurden mit isotaktischem Polypropylen zu Kompositwerkstoffen verarbeitet. Dabei wurde ein Späneanteil von 60 Gew.-% bei 40 Gew.-% Polypropylen eingesetzt.

Der Kompositwerkstoff aus silanisierten Fichtenholzspänen und Polypropylen wurde dadurch erzeugt, dass eine mechanische Mischung der silanisierten Fichtenholzspäne mit granuliertem Polypropylen (Polypropylen-Random-Copolymer (statistisch verteiltes Copolymer), Schmelzflußindex nach ISO 1133 (MFI) = 1,8 ± 0,4 g/10 min bei 230 °C/2,16 kg) im Walzwerk bzw. Walzenstuhl hergestellt und anschließend gepresst wurde. Dazu wurden auf dem Walzwerk aus der Mischung aus granuliertem Polypropylen und silanisierten Fichtenholzspänen bei 180 °C und einer Umdrehungszahl von 25 U/min über 5 bis 10 min homogene Walzfelle hergestellt, die anschließend in der Presse (z.B. Plattenpresse "Schwabendan", Typ Polystat 400A) zunächst ohne Druck über 20 min auf ca. 180 °C aufgeheizt und dann für 30 s bei 10 bar gepreßt wurden. Die Abkühlung auf Raumtemperatur erfolgte über 20 min in der Presse bei aufrecht erhaltenem Druck.

Die mechanischen Eigenschaften wurden anschließend in Anlehnung an die Normen ISO 180 (Kerbschlagzähigkeit), ISO 527-2 (Zugfestigkeit) bzw. ISO 1183-1 (Dichte) bestimmt und sind in der nachfolgenden Tabelle 1 dargestellt.

### Tabelle 1: Mechanische Eigenschaften von Kompositwerkstoffen

| | Behandlung der Holzspäne mit Organopolysiloxan aus | | |
|---|---|---|---|
| | Dynasilan VTMO | Dynasilan AMEO | Kontrolle (Wasser) |
| Kerbschlagzähigkeit (J) | 4,37 | 4,78 | 4,07 |
| E-Modul (N/mm²) | 3144 | 3316 | 3721 |
| Zugfestigkeit (N/mm²) | 25,6 | 33,8 | 25,8 |
| Dichte (g/cm³) | 1,08 | 1,094 | 1,07 |

Die Ergebnisse in Tabelle 1 zeigen, dass die Kerbschlagzähigkeit der Kompositwerkstoffe gegenüber dem Kontrollwerkstoff mit unbehandelten Fichtenholzspänen erhöht war, während das E-Modul niedriger lag. Die Zugfestigkeit blieb für die mit Organopolysiloxan aus Dynasilan VTMO behandelten Fichtenholzspäne annähernd unverändert, während sie für den Kompositwerkstoff der mit Organopolysiloxan aus Dynasilan AMEO behandelten Fichtenholzspäne deutlich gesteigert war. Die Dichte der erfindungsgemäßen Kompositwerkstoffe war erhöht, was ebenso wie die gesteigerte Kerbschlagzähigkeit und die gleiche bis gesteigerte Zugfestigkeit auf einen engeren Verbund zwischen lignocellulosischen Fasern und Kunststoff hinweist.

Zur Bestimmung der Einlagerung von Wasser wurden die Kompositwerkstoffe in Anlehnung an die EN ISO62 für 14 Tage in Wasser gelagert, wobei die Gewichtszunahme nach 1, 3, 7 und 14 Tagen bestimmt wurde. Die prozentualen Gewichtszunahmen sind in der nachfolgenden Tabelle 2 dargestellt.

**Tabelle 2: Gewichtszunahme durch Wassereinlagerung in Kompositwerkstoffe**

| | Behandlung der Holzspäne mit Organopolysiloxan aus | | |
|---|---|---|---|
| | Dynasilan VTMO | Dynasilan AMEO | Kontrolle (Wasser) |
| Ausgangsgewicht (g) | 3,5440 | 3,7151 | 3,4980 |
| Gewichtszunahme n. 1 d (%) | 1,43 | 1,67 | 2,17 |
| Gewichtszunahme n. 3 d (%) | 2,24 | 2,54 | 3,35 |
| Gewichtszunahme n. 7 d (%) | 3,30 | 3,60 | 5,03 |
| Gewichtszunahme n. 14 d (%) | 4,50 | 4,53 | 6,93 |

Die Werte der Tabelle 2 zeigen anhand der geringeren Gewichtszunahme bei den erfindungsgemäßen Kompositwerkstoffen am Beispiel der mit Organopolysiloxan aus Dynasilan VTMO bzw. Dynasilan AMEO behandelten Fichtenholzspäne im Verbund mit Polypropylen, eine deutlich geringere Wassereinlagerung gegenüber dem Kompositwerkstoff mit Wasser bzw. unbehandelten Fichtenholzspänen (Kontrolle).

### Beispiel 1: Kompositwerkstoff aus Polypropylen und Fichtenholzspänen, die mit Dynasilan HS 2909 behandelt sind

Fichtenholzspäne wurden entsprechend Beispiel 1 mit einer wässrigen Formulierung aus Organopolysiloxan aus 3-Aminopropyltriethoxysilan und Isobutyltriethoxysilan, kommerziell erhältlich unter der Bezeichnung Dynasilan HS 2909 (Degussa AG, Deutschland) in Konzentrationen von 3, 4, 5 und 7,5 Gew.-% für 12 Stunden unter Schütteln inkubiert. Die Späne wurden anschließend abgesiebt und bei 103 °C für 72 Stunden getrocknet.

Die mit Dynasilan HS 2909 behandelten Fichtenholzspäne wurden zu 60 Gew.-% mit isotaktischem Polypropylen (40 Gew.-%) durch Mischen mit Granulat und anschließender Extrusion zu einem erfindungsgemäßen Kompositwerkstoff verarbeitet. Die mechanischen Eigenschaften sind in der nachfolgenden Tabelle 3 in Abhängigkeit von der eingesetzten Konzentration an Organopolysiloxan (Dynasilan HS 2909) dargestellt.

**Tabelle 3: Mechanische Eigenschaften des erfindungsgemäßen Kompositwerkstoffs aus isotaktischem Polypropylen mit Fichtenholzspänen, behandelt mit Dynasilan HS 2909**

| | Dynasilan HS 2909 (3%) | Dynasilan HS 2909 (4,5 %) | Dynasilan HS 2909 (7,5 %) | Kontrolle (Wasser) |
|---|---|---|---|---|
| Kerbschlagzähigkeit (J) | 6,0 | 6,25 | 5,72 | 4,07 |
| E-Modul (N/mm²) | 3274 | 3441 | 3449 | 3721 |
| Zugfestigkeit (N/mm²) | 31,3 | 34,2 | 35,7 | 25,8 |
| Dichte (g/cm³) | 1,09 | 1,09 | 1,09 | 1,07 |

Die Werte in Tabelle 3 zeigen, dass zumindest die Kerbschlagzähigkeit und die Zugfestigkeit des Kompositwerkstoffs durch die Behandlung der lignocellulosischen Fasern mit einem erfindungsgemäßen Organopolysiloxan gegenüber der Kontrolle, die nur mit Wasser behandelte Fichtenholzspäne enthielt, verbessert waren.

Die Einlagerung von Wasser wurde entsprechend Beispiel 2 bestimmt; die Werte sind in der nachfolgenden Tabelle 4 zusammengefasst.

**Tabelle 4: Wassereinlagerung in Kompositwerkstoff aus isotaktischem Polypropylen mit Fichtenholzspänen, silanisiert mit Dynasilan HS 2909**

| | Dynasilan HS 2909 (3%) | Dynasilan HS 2909 (4,5 %) | Dynasilan HS 2909 (7,5 %) | Kontrolle (Wasser) |
|---|---|---|---|---|
| Ausgangsgewicht (g) | 3,5688 | 3,6480 | 3,6231 | 3,4980 |
| Gewichtszunahme n. 1 d (%) | 1,28 | 1,06 | 0,98 | 2,17 |
| Gewichtszunahme n. 3 d (%) | 1,93 | 1,76 | 1,58 | 3,35 |
| Gewichtszunahme n. 7 d (%) | 2,85 | 2,56 | 2,35 | 5,03 |
| Gewichtszunahme n. 14 d (%) | 3,87 | 3,49 | 3,2 | 6,93 |

Die Messwerte von Tabelle 4 zeigen, dass die Wassereinlagerung durch die Behandlung mit einem erfindungsgemäßen Organopolysiloxan deutlich verringert wird, wobei bereits die Behandlung mit einer 3 Gew.-% Lösung ausreicht, um die Gewichtszunahme nach 14 Tagen auf einen Wert von kleiner 4 % zu senken, was in etwa der Wasseraufnahme durch isotaktisches Polypropylen ohne Fichtenholzspäne entspricht. Ein höherer Gehalt an erfindungsgemäßen Organopolysiloxanen, beispielsweise erhältlich durch Behandlung der Fichtenholzspäne mit höheren Konzentrationen der erfindungsgemäßen wässrigen Organopolysiloxane, führt zu weiter erniedrigten Werten für die Wassereinlagerung des Kompositwerkstoffs.

## Patentansprüche

1. Kompositwerkstoff, der lignocellulosische Fasern und thermoplastischen Kunststoff enthält, **dadurch gekennzeichnet, dass** die lignocellulosischen Fasern mit einer wässrigen Zusammensetzung behandelt sind, die ein Organopolysiloxan umfaßt, das auf mindestens einem wasserlöslichen Aminoalkyltrialkoxysilan und mindestens einem wasserunlöslichen Alkyltrialkoxysilan basiert, wobei die lignocellulosischen Fasern im Anschluss an die Kontaktierung mit Organopolysiloxan auf eine Temperatur von oder oberhalb von 80 °C erwärmt wurden.

2. Kompositwerkstoff nach Anspruch 1, **dadurch gekennzeichnet, dass** das Organopolysiloxan zumindest ein wasserunlösliches Dialkyldialkoxysilan enthält.

3. Kompositwerkstoff nach einem der vorangehenden Ansprüche, **dadurch gekennzeichnet, dass**
das wasserlösliche Aminoalkoxysilan die allgemeine Formel I
R-Si(R¹)_{y}(OR^{1*})_{3-y} (I)
hat und das wasserunlösliche Alkyltrialkoxysilan die allgemeine Formel II
R²-Si(OR^{1**})₃ (II),
wobei R¹, R^{1*} und R^{1**} unabhängig ein Methyl- oder Ethylrest ist, R² ein linearer, zyklischer oder verzweigter Alkylrest mit 1 bis 8 Kohlenstoffatomen ist und y = 0 oder 1 und wobei R eine primäre, sekundäre, tertiäre, bevorzugt quartäre aliphatische oder aromatische Aminogruppe ist.

4. Kompositwerkstoff nach einem der Ansprüche 2 oder 3, **dadurch gekennzeichnet, dass** das wasserunlösliche Dialkyldialkoxysilan die allgemeine Formel III
AA'-Si(OR^{1***})₂ (III)
aufweist,
wobei R¹, R^{1*}, R^{1**} und R^{1***} unabhängig ein Methyl- oder Ethylrest ist, R² ein linearer, zyklischer oder verzweigter Alkylrest mit 1 bis 8 Kohlenstoffatomen, A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist.

5. Kompositwerkstoff nach einem der Ansprüche 1 oder 2, **dadurch gekennzeichnet, dass** das wasserlösliche Aminoalkoxysilan die allgemeine Formel I
R-Si(R¹)_{y}(OR^{1*})_{3-y} (I)
hat und das wasserunlösliche Alkyltrialkoxysilan die allgemeine Formel II
R²-Si(OR^{1**})₃ (II),
wobei R eine aminofunktionelle organische Gruppe der allgemeinen Formel V
[Z_{(f+c·f*)]}^{(f+c·f*)-}[A_{d}NH⁻_{(2+f-d}) [CH₂)NA¹ₑH⁻_{(1-e+f*)}]_{c}(CH₂)_{b}⁻]^{(f+c·f*)+} (V),
darstellt, bei der 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤f*≤1 ist,
A und A¹ einen Benzyl- oder Vinylbenzylrest darstellen, N Stickstoff ist und Z ein einwertiger anorganischer oder organischer Säurerest ist,
wobei R¹, R¹* und R¹** einen Methyl- oder Ethylrest und
R² einen linearen, cyclischen oder verzweigten Alkylrest mit 1 bis 6 Kohlenstoffatomen oder eine Ureido-Alkylgruppe der allgemeinen Formel VI darstellt
NH₂-CO-NH-(CH₂)_{b}- (VI)
und y 0 bis 1 ist.

6. Kompositwerkstoff nach einem der vorangehenden Ansprüche, **dadurch gekennzeichnet, dass** das Organopolysiloxan 3-Aminopropyltriethoxysilan in Mischung mit Isobutyltriethoxysilan aufweist.

7. Verwendung von lignocellulosischen Fasern in einem Kompositwerkstoff nach einem der vorangehenden Ansprüche, **dadurch gekennzeichnet, dass** die lignocellulosischen Fasern mit einem Organopolysiloxan, erhältlich durch Mischen wasserlöslicher Aminoalkylalkoxysilane der allgemeinen Formel I,
R-Si(R¹)_{y}(OR^{1*})_{3-y} (I)
mit einem wasserunlöslichen Alkyltrialkoxysilan der allgemeinen Formel II
R²-Si(OR^{1**})₃ (II)
und/oder einem wasserunlöslichen Dialkyldialkoxysilan der allgemeinen Formel III
AA'-Si(OR^{1***})₂ (III),
wobei R¹, R¹*, R^{1**} und R^{1***} unabhängig ein Methyl- oder Ethylrest ist, R² ein linearer, zyklischer oder verzweigter Alkylrest mit 1 bis 8 Kohlenstoffatomen,
A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist und y = 0 oder 1 und wobei R eine primäre, sekundäre, tertiäre, bevorzugt quartäre aliphatische oder aromatische Aminogruppen ist, kontaktiert worden sind und
auf eine Temperatur oberhalb 80 °C erwärmt worden sind.

8. Verwendung nach Anspruch 7, **dadurch gekennzeichnet, dass** die lignocellulosischen Fasern mit einem Organopolysiloxan, erhältlich durch Mischen wasserlöslicher Aminoalkylalkoxysilane der allgemeinen Formel I,
R-Si(R¹)_{y}(OR^{1*})_{3-y} (I)
mit einem wasserunlöslichen Alkyltrialkoxysilan der allgemeinen Formel II
R²-Si(OR^{1**})₃ (II),
wobei R eine aminofunktionelle organische Gruppe der allgemeinen Formel V
[Z_{(f+c·f*)}]^{(f+c·f*)-}[A_{d}NH⁻_{(2+f-d)} [(CH₂)ₐNA¹ₑH⁻_{(1-e+f*)})]_{c}(CH₂)_{b}⁻]^{(f+c·f*)+} (V),
darstellt, bei der 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1 ist,
A und A¹ einen Benzyl- oder Vinylbenzylrest darstellen, N Stickstoff ist und Z ein einwertiger anorganischer oder organischer Säurerest ist,
wobei R¹, R¹* und R¹** einen Methyl- oder Ethylrest und R² einen linearen, cyclischen oder verzweigten Alkylrest mit 1 bis 6 Kohlenstoffatomen oder eine Ureido-Alkylgruppe der allgemeinen Formel VI
NH₂-CO-NH-(CH₂)_{b}- (VI)
darstellt und y 0 bis 1 ist, kontaktiert worden sind und auf eine Temperatur oberhalb 80 °C erwärmt worden sind.

9. Verfahren zur Herstellung eines Kompositwerkstoffs nach einem der Ansprüche 1 bis 6, **gekennzeichnet durch** die Behandlung lignocellulosischer Fasern mit einem Organopolysiloxan in wässriger Zusammensetzung, erhältlich **durch** Mischen eines wasserlöslichen Aminoalkylalkoxysilans der allgemeinen Formel I
R-Si(R¹)_{y}(OR^{1*})_{3-y} (I)
mit einem wasserunlöslichen Alkyltrialkoxysilan der allgemeinen Formel II
R²-Si(OR^{1**})₃ (II)
und/oder einem wasserunlöslichen Dialkyldialkoxysilan der allgemeinen Formel III
AA'-Si(OR1^{***})₂ (III),
wobei R¹, R^{1*}, R^{1**} und R^{1***} unabhängig ein Methyl- oder Ethylrest ist, R² ein linearer, zyklischer oder verzweigter Alkylrest mit 1 bis 8 Kohlenstoffatomen,
A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist und y = 0 oder 1 und wobei R eine primäre, sekundäre, tertiäre, bevorzugt quartäre aliphatische oder aromatische Aminogruppe ist,
Trocknen der lignocellulosischen Fasern bei einer Temperatur oberhalb 80 °C, und
Vermischen mit einem thermoplastischen Kunststoff oberhalb der Schmelztemperatur des thermoplastischen Kunststoffs.

10. Verfahren nach Anspruch 9, **gekennzeichnet durch** die Behandlung lignocellulosischer Fasern mit einem Organopolysiloxan in wässriger Zusammensetzung, erhältlich **durch** Mischen eines wasserlöslichen Aminoalkylalkoxysilans der allgemeinen Formel I
R-Si(R¹)_{y}(OR^{1*})_{3-y} (I)
mit einem wasserunlöslichen Alkyltrialkoxysilan der allgemeinen Formel II
R²-SiCOR^{1**})₃ (II),
wobei R eine aminofunktionelle organische Gruppe der allgemeinen Formel V
[Z_{(f+c·f*)}]^{(f+c·f*)-}[A_{d}NH⁻_{(2+f-d)} [(CH₂)ₐNA¹ₑH⁻_{(1-e+f*)}]_{c}(CH₂)_{b}⁻]^{(f+c·f*)+} (V),
darstellt, bei der 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1 ist,
A und A¹ einen Benzyl- oder Vinylbenzylrest darstellen, N Stickstoff ist und Z ein einwertiger anorganischer oder organischer Säurerest ist,
wobei R¹, R¹* und R¹** einen Methyl- oder Ethylrest und
R² einen linearen, cyclischen oder verzweigten Alkylrest mit 1 bis 6 Kohlenstoffatomen oder eine Ureido-Alkylgruppe der allgemeinen Formel VI
NH₂-CO-NH-(CH₂)_{b}- (VI)
darstellt und y 0 bis 1 ist,
Trocknen der lignocellulosischen Fasern bei einer Temperatur oberhalb 80 °C, und
Vermischen mit einem thermoplastischen Kunststoff oberhalb der Schmelztemperatur des thermoplastischen Kunststoffs.

11. Verwendung von Organopolysiloxan in wässriger Zusammensetzung zur Herstellung eines Kompositwerkstoffs nach einem der Ansprüche 1 bis 6, erhältlich durch Mischen eines wasserlöslichen Aminoalkylalkoxysilans der allgemeinen Formel I
R-Si(R¹)_{y}(OR^{1*})_{3-y} (I)
mit einem wasserunlöslichen Alkyltrialkoxysilan der allgemeinen Formel II
R²-Si(OR^{1**})₃ (II)
und/oder einem wasserunlöslichen Dialkyldialkoxysilan der allgemeinen Formel III
AA'-Si(OR^{1***})₂ (III),
wobei R¹, R^{1*}, R^{1**} und R^{1***} unabhängig ein Methyl- oder Ethylrest ist, R² ein linearer, zyklischer oder verzweigter Alkylrest mit 1 bis 8 Kohlenstoffatomen,
A ein unverzweigter oder verzweigter Alkylrest mit 1 bis 3 Kohlenstoffatomen und A' ein unverzweigter oder verzweigter Alkylrest mit 1 bis 3 Kohlenstoffatomen ist und y = 0 oder 1 und wobei R eine primäre, sekundäre, tertiäre, bevorzugt quartäre aliphatische oder aromatische Aminogruppen.

12. Verwendung nach Anspruch 11, erhältlich durch Mischen eines wasserlöslichen Aminoalkylalkoxysilans der allgemeinen Formel I
R-Si(R¹)_{y}(OR^{1*})_{3-y} (I)
mit einem wasserunlöslichen Alkyltrialkoxysilan der allgemeinen Formel II
R²-Si(OR^{1**})₃ (II),
wobei R eine aminifunktionelle organische Gruppe der allgemeinen Formel V
[Z_{(f+c·f*)}]^{(f+c·f*)-}[A_{d}NH⁻_{(2+f-d)} [(CH₂)ₐNA¹ₑH⁻(_{1-e+f*})]_{c}(CH₂)_{b}⁻]^{(f+c·f*)+} (V),
darstellt, bei der 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1 ist,
A und A¹ einen Benzyl- oder Vinylbenzylrest darstellen, N Stickstoff ist und Z ein einwertiger anorganischer oder organischer Säurerest ist,
wobei R¹, R¹* und R¹** einen Methyl- oder Ethylrest und R² einen linearen, cyclischen oder verzweigten Alkylrest mit 1 bis 6 Kohlenstoffatomen oder eine Ureido-Alkylgruppe der allgemeinen Formel VI
NH₂-CO-NH-(CH₂)_{b}- (VI)
darstellt und y 0 bis 1 ist.

## Claims

1. Composite material which contains lignocellulosic fibers and a thermoplastic, **characterized in that** the lignocellulosic fibers are treated with an aqueous composition which comprises an organopolysiloxane which is based on at least one water-soluble aminoalkyltrialkoxysilane and at least one water-insoluble alkyltrialkoxysilane, wherein the lignocellulosic fibers, after the contacting with organopolysiloxane, were heated to a temperature of or above 80°C.

2. Composite material according to Claim 1, **characterized in that** the organopolysiloxane contains at least one water-insoluble dialkyldialkoxysilane.

3. Composite material according to either of the preceding claims, **characterized in that**
the water-soluble aminoalkoxysilane has the general formula I
R-Si(R¹)_{y}(OR^{1*})_{3-y} (I)
and the water-insoluble alkyltrialkoxysilane has the general formula II
R²-Si(OR^{1**})₃ (II)
in which R¹, R^{1*} and R^{1**} independently are a methyl or ethyl radical, R² is a linear, cyclic or branched alkyl radical having 1 to 8 carbon atoms and y = 0 or 1 and in which R is a primary, secondary, tertiary, preferably quaternary aliphatic or aromatic amino group.

4. Composite material according to either of Claims 2 and 3, **characterized in that** the water-insoluble dialkyldialkoxysilane has the general formula III
AA'-Si (OR^{1***}) ₂ (III)
in which R¹, R^{1*}, R^{1**} and R^{1***} independently are a methyl or ethyl radical, R² is a linear, cyclic or branched alkyl radical having 1 to 8 carbon atoms, A is a straight-chain or branched alkyl radical having 1 to 3 carbon atoms and A' is a straight-chain or branched alkyl radical having 1 to 3 carbon atoms.

5. Composite material according to either of Claims 1 and 2, **characterized in that** the water-soluble aminoalkoxysilane has the general formula I
R-Si (R¹)_{y}(OR^{1*})_{3-y} (I)
and the water-insoluble alkyltrialkoxysilane has the general formula II
R²-Si(OR^{1**})₃ (II)
R being an aminofunctional organic group of the general formula V
[Z_{(f+c+f*)}]^{(f+c+f*)}-[A_{d}NH⁻_{(2+f-d)} [(CH₂)ₐNA¹ₑH⁻_{(1-e+f*)}]_{c}(CH₂)_{b}⁻(CH₂)_{b}⁻]^{(f+c+f*)+} (V)
in which 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1,
A and A¹ are a benzyl or vinylbenzyl radical, N is nitrogen and Z is a monovalent inorganic or organic acid radical,
R¹, R^{1*} and R^{1**} being a methyl or ethyl radical and R² being a linear, cyclic or branched alkyl radical having 1 to 6 carbon atoms or a ureidoalkyl group of the general formula VI
NH₂-CO-NH-(CH₂)_{b}- (VI)
and y being from 0 to 1.

6. Composite material according to any of the preceding claims, **characterized in that** the organopolysiloxane comprises 3-aminopropyltriethoxysilane as a mixture with isobutyltriethoxysilane.

7. Use of lignocellulosic fibers in a composite material according to any of the preceding claims, **characterized in that** the lignocellulosic fibers have been brought into contact with an organopolysiloxane obtainable by mixing water-soluble aminoalkylalkoxysilanes of the general formula I
R-Si(R¹)_{y}(OR^{1*})_{3-y} (I)
with a water-insoluble alkyltrialkoxysilane of the general formula II
R²-Si(OR^{1**})₃ (II)
and/or a water-insoluble dialkyldialkoxysilane of the general formula III
AA'-Si (OR^{1***}) ₂ (III)
R¹, R^{1*}, R^{1**} and R^{1***} independently being a methyl or ethyl radical, R² being a linear, cyclic or branched alkyl radical having 1 to 8 carbon atoms, A being a straight-chain or branched alkyl radical having 1 to 3 carbon atoms and A' being a straight-chain or branched alkyl radical having 1 to 3 carbon atoms and y = 0 or 1, and R being a primary, secondary, tertiary, preferably quaternary aliphatic or aromatic amino groups, and have been heated to a temperature above 80°C.

8. Use according to Claim 7, **characterized in that** the lignocellulosic fibers have been brought into contact with an organopolysiloxane obtainable by mixing water-soluble aminoalkylalkoxysilanes of the general formula I
R-Si(R¹)_{y}(OR^{1*})_{3-y} (I)
with a water-insoluble alkyltrialkoxysilane of the general formula II
R²-Si(OR^{1**})₃ (II)
R being an aminofunctional organic group of the general formula V
[Z_{(f+c+f*)}]^{(f+c+f*)-}[A_{d}NH⁻_{(2+f-d)}[(CH₂)ₐNA¹ₑH⁻_{(1-e+f*)}]_{c}(CH₂)_{b}⁻]^{(f+c+f*)+} (V)
in which 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1,
A and A¹ are a benzyl or vinylbenzyl radical, N is nitrogen and Z is a monovalent inorganic or organic acid radical,
R¹, R^{1*} and R^{1**} being a methyl or ethyl radical and R² being a linear, cyclic or branched alkyl radical having 1 to 6 carbon atoms or a ureidoalkyl group of the general formula VI NH₂-CO-NH-(CH₂)_{b}- (VI) and y is from 0 to 1, and have been heated to a temperature above 80°C.

9. Process for producing a composite material according to any of Claims 1 to 6, **characterized by** the treatment of lignocellulosic fibers with an organopolysiloxane in aqueous composition obtainable by mixing a water-soluble aminoalkylalkoxysilane of the general formula I
R-Si(R¹)_{y}(OR^{1*})_{3-y} (I)
with a water-insoluble alkyltrialkoxysilane of the general formula II
R²-Si(OR^{1**})₃ (II)
and/or a water-insoluble dialkyldialkoxysilane of the general formula III
AA'-Si(OR^{1***})₂ (III)
R¹, R^{1*}, R^{1**} and R^{1***} independently being a methyl or ethyl radical, R² being a linear, cyclic or branched alkyl radical having 1 to 8 carbon atoms, A being a straight-chain or branched alkyl radical having 1 to 3 carbon atoms and A' being a straight-chain or branched alkyl radical having 1 to 3 carbon atoms and y = 0 or 1, and R being a primary, secondary, tertiary, preferably quaternary aliphatic or aromatic amino group, drying of the lignocellulosic fibers at a temperature above 80°C and mixing with a thermoplastic above the melting point of the thermoplastic.

10. Process according to Claim 9, **characterized by** the treatment of lignocellulosic fibers with an organopolysiloxane in aqueous composition obtainable by mixing a water-soluble aminoalkylalkoxysilane of the general formula I
R-Si(R¹)_{y}(OR^{1*})_{3-y} (I)
with a water-insoluble alkyltrialkoxysilane of the general formula II
R²Si(OR^{1**})₃ (II)
R being an aminofunctional organic group of the general formula V
[Z_{(f+c•f*)}]^{(f+c}•^{f*)}-[A_{d}NH⁻_{(2+f-d)} [(CH₂)ₐNA¹ₑH⁻_{(1-e+f*)}]_{c}(CH₂)_{b}⁻]^{(f+c}•^{f*)+} (V)
in which 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1,
A and A¹ are a benzyl or vinylbenzyl radical, N is nitrogen and Z is a monovalent inorganic or organic acid radical,
R¹, R^{1*} and R^{1**} being a methyl or ethyl radical and R² being a linear, cyclic or branched alkyl radical having 1 to 6 carbon atoms or a ureidoalkyl group of the general formula VI
NH₂-CO-NH-(CH₂)_{b}- (VI)
and y is from 0 to 1, drying of the lignocellulosic fibers at a temperature above 80°C and mixing with a thermoplastic above the melting point of the thermoplastic.

11. Use of organopolysiloxane in aqueous composition for producing a composite material according to any of Claims 1 to 6, obtainable by mixing a water-soluble aminoalkylalkoxysilane of the general formula I
R-Si(R¹)_{y}(OR^{1*})_{3-y} (I)
with a water-insoluble alkyltrialkoxysilane of the general formula II
R²-Si(OR^{1**})₃ (II)
and/or a water-insoluble dialkyldialkoxysilane of the general formula III
AA'-Si (OR^{1***})₂ (III)
R¹, R^{1*}, R^{1**} and R^{1***} independently being a methyl or ethyl radical, R² being a linear, cyclic or branched alkyl radical having 1 to 8 carbon atoms, A being a straight-chain or branched alkyl radical having 1 to 3 carbon atoms and A' being a straight-chain or branched alkyl radical having 1 to 3 carbon atoms and y = 0 or 1, and R being a primary, secondary, tertiary, preferably quaternary aliphatic or aromatic amino groups.

12. Use according to Claim 11, obtainable by mixing a water-soluble aminoalkylalkoxysilane of the general formula I
R-Si (R¹)_{y}(OR^{1*})_{3-y} (I)
with a water-insoluble alkyltrialkoxysilane of the general formula II
R²-Si(OR^{1**})₃ (II)
R being an aminofunctional organic group of the general formula V
[Z_{(f+c+f*)}]^{(f+c+f*)}-[A_{d}NH⁻_{(2+f-d)}[(CH₂)ₐNA¹ₑH⁻_{(1-e+f*)}]_{c}(CH₂)_{b}⁻]^{(f+c+f*)+} (V)
in which 0 ≤ a ≤ 6; 0 ≤ b ≤ 1; 0 ≤ c ≤ 1; 0 ≤ d ≤ 2; 0 ≤ e ≤ 1; 0 ≤ f ≤ 1; 0 ≤ f* ≤ 1,
A and A¹ are a benzyl or vinylbenzyl radical, N is nitrogen and Z is a monovalent inorganic or organic acid radical,
R¹, R^{1*} and R^{1**} being a methyl or ethyl radical and R² being a linear, cyclic or branched alkyl radical having 1 to 6 carbon atoms or a ureidoalkyl group of the general formula VI
NH₂-CO-NH-(CH₂)_{b}- (VI)
and y is from 0 to 1.

## Revendications

1. Matériau composite, qui contient des fibres lignocellulosiques et un matériau synthétique thermoplastique, **caractérisé en ce que** les fibres lignocellulosiques sont traitées par une composition aqueuse qui comprend un organopolysiloxane, qui est basé sur au moins un aminoalkyltrialcoxysilane soluble dans l'eau et au moins un alkyltrialcoxysilane insoluble dans l'eau, les fibres lignocellulosiques étant chauffées après le contact avec l'organopolysiloxane à une température supérieure à 80°C.

2. Matériau composite selon la revendication 1, **caractérisé en ce que** l'organopolysiloxane contient au moins un dialkyldialcoxysilane insoluble dans l'eau.

3. Matériau composite selon l'une quelconque des revendications précédentes, **caractérisé en ce que** l'aminoalcoxysilane soluble dans l'eau présente la formule générale I
R-Si(R¹)_{y}(OR^{1*})_{3-y} (I)
et l'alkyltrialcoxysilane insoluble dans l'eau présente la formule générale II
R²-Si(OR^{1**})₃ (II),
R¹, R^{1*} et R^{1**} représentant, indépendamment, un radical méthyle ou éthyle, R² représentant un radical alkyle linéaire, cyclique ou ramifié, comprenant 1 à 8 atomes de carbone et y = 0 ou 1 et R représentant un groupe amino aliphatique ou aromatique primaire, secondaire, tertiaire, de préférence quaternaire.

4. Matériau composite selon l'une quelconque des revendications 2 ou 3, **caractérisé en ce que** le dialkyldialcoxysilane insoluble dans l'eau présente la formule générale III
AA'-Si(OR^{1***})₂ (III)
R¹, R^{1*}, R^{1**} et R^{1***} représentant, indépendamment, un radical méthyle ou éthyle, R² représentant un radical alkyle linéaire, cyclique ou ramifié, comprenant 1 à 8 atomes de carbone, A représentant un radical alkyle non ramifié ou ramifié comprenant 1 à 3 atomes de carbone et A' représentant un radical alkyle non ramifié ou ramifié comprenant 1 à 3 atomes de carbone.

5. Matériau composite selon l'une quelconque des revendications 1 ou 2, **caractérisé en ce que** l'aminoalcoxysilane soluble dans l'eau présente la formule générale I
R-Si(R¹)_{y}(OR^{1*})_{3-y} (I)
et l'alkyltrialcoxysilane insoluble dans l'eau présente la formule générale II
R²-Si(OR^{1**})₃ (II),
R représentant un groupe organique à fonctionnalité amino de formule générale V
[Z_{(f+c•f*)}]^{(f+c•f*)-}[A_{d}NH⁻_{(2+f-d)} [(CH₂)ₐNA¹ₑH⁻_{(1-e+f*)}]_{c}(CH₂)_{b}⁻]^{(f+c•f*)+} (V),
dans laquelle 0 ≤ a ≤ 6 ; 0 ≤ b ≤ 1 ; 0 ≤ c ≤ 1 ; 0 ≤ d ≤ 2 ; 0 ≤ e ≤ 1 ; 0 ≤ f ≤ 1 ; 0 ≤ f* ≤ 1,
A et A¹ représentent un radical benzyle ou vinylbenzyle,
N représente azote et Z représente un radical acide inorganique ou organique, monovalent,
R¹, R^{1*} et R^{1**} représentant un radical méthyle ou éthyle et R² représentant un radical alkyle linéaire, cyclique ou ramifié comprenant 1 à 6 atomes de carbone ou un groupe uréidoalkyle de formule générale VI
NH₂-CO-NH-(CH₂)_{b}- (VI)
et y valant 0 à 1.

6. Matériau composite selon l'une quelconque des revendications précédentes, **caractérisé en ce que** l'organopolysiloxane présente du 3-aminopropyltriéthoxysilane en mélange avec de l'isobutyltriéthoxysilane.

7. Utilisation de fibres lignocellulosiques dans un matériau composite selon l'une quelconque des revendications précédentes, **caractérisée en ce que** les fibres lignocellulosiques ont été mises en contact avec un organopolysiloxane, pouvant être obtenu par mélange d'aminoalkylalcoxysilanes solubles dans l'eau de formule générale I,
R-Si(R¹)_{y}(OR^{1*})_{3-y} (I)
avec un alkyltrialcoxysilane insoluble dans l'eau de formule générale II
R²Si(OR^{1**})₃ (II)
et/ou un dialkyldialcoxysilane insoluble dans l'eau de formule générale III
AA'-Si (OR^{1***})₂ (III),
R¹, R^{1*}, R^{1**} et R^{1***} représentant, indépendamment, un radical méthyle ou éthyle, R² représentant un radical alkyle linéaire, cyclique ou ramifié, comprenant 1 à 8 atomes de carbone, A représentant un radical alkyle non ramifié ou ramifié comprenant 1 à 3 atomes de carbone et A' représentant un radical alkyle non ramifié ou ramifié comprenant 1 à 3 atomes de carbone et y = 0 ou 1 et R représentant un groupes amino aromatique ou aliphatique primaire, secondaire, tertiaire, de préférence quaternaire et ont été chauffées à une température supérieure à 80°C.

8. Utilisation selon la revendication 7, **caractérisée en ce que** les fibres lignocellulosiques ont été mises en contact avec un organopolysiloxane, pouvant être obtenu par mélange d'aminoalkylalcoxysilanes solubles dans l'eau de formule générale I,
R-Si(R¹)_{y}(OR^{1*})_{3-y} (I)
avec un alkyltrialcoxysilane insoluble dans l'eau de formule générale II
R²-Si(OR^{1**})₃ (II),
R représentant un groupe organique à fonctionnalité amino de formule générale V
[Z_{(f+c•f*)}]^{(f+c•f*)-}[A_{d}NH⁻_{(2-f-d)}[(CH₂)ₐNA¹ₑH⁻_{(1-e+f*)}]_{c}(CH₂)_{b}⁻]^{(f+c•f*)+} (V),
dans laquelle 0 ≤ a ≤ 6 ; 0 ≤ b ≤ 1 ; 0 ≤ c ≤ 1 ; 0 ≤ d ≤ 2 ; 0 ≤ e ≤ 1 ; 0 ≤ f ≤ 1 ; 0 ≤ f * ≤ 1,
A et A¹ représentent un radical benzyle ou vinylbenzyle, N représente azote et Z représente un radical acide inorganique ou organique, monovalent,
R¹, R^{1*} et R^{1**} représentant un radical méthyle ou éthyle et
R² représentant un radical alkyle linéaire, cyclique ou ramifié comprenant 1 à 6 atomes de carbone ou un groupe uréidoalkyle de formule générale VI
NH₂-CO-NH-(CH₂)_{b}- (VI)
et y valant 0 à 1 et ont été chauffées à une température supérieure à 80°C.

9. Procédé pour la préparation d'un matériau composite selon l'une quelconque des revendications 1 à 6, **caractérisé par** le traitement de fibres lignocellulosiques par un organopolysiloxane dans une composition aqueuse, pouvant être obtenu par mélange d'un aminoalkylalcoxysilane soluble dans l'eau de formule générale I,
R-Si(R¹)_{y}(OR^{1*})_{3-y} (I)
avec un alkyltrialcoxysilane insoluble dans l'eau de formule générale II
R²-Si(OR^{1**})₃ (II)
et/ou un dialkyldialcoxysilane insoluble dans l'eau de formule générale III
AA'-Si (OR^{1***}) ₂ (III),
R¹, R^{1*}, R^{1**} et R^{1***} représentant, indépendamment, un radical méthyle ou éthyle, R² représentant un radical alkyle linéaire, cyclique ou ramifié, comprenant 1 à 8 atomes de carbone, A représentant un radical alkyle non ramifié ou ramifié comprenant 1 à 3 atomes de carbone et A' représentant un radical alkyle non ramifié ou ramifié comprenant 1 à 3 atomes de carbone et y = 0 ou 1 et R représentant un groupe amino aromatique ou aliphatique primaire, secondaire, tertiaire, de préférence quaternaire, le séchage des fibres lignocellulosiques à une température supérieure à 80°C et
le mélange avec un matériau synthétique thermoplastique au-dessus de la température de fusion du matériau synthétique thermoplastique.

10. Procédé selon la revendication 9, **caractérisé par** le traitement de fibres lignocellulosiques par un organopolysiloxane dans une composition aqueuse, pouvant être obtenu par mélange d'un aminoalkylalcoxysilane soluble dans l'eau de formule générale I,
R-Si(R¹)_{y}(OR^{1*})_{3-y} (I)
avec un alkyltrialcoxysilane insoluble dans l'eau de formule générale II R²-Si (OR^{1**})₃ (II), R représentant un groupe organique à fonctionnalité amino de formule générale V
[Z_{(f+c•f*)}]^{(f+c•f*)-}[A_{d}NH⁻_{(2+f-d)} [(CH₂)ₐNA¹ₑH⁻_{(1-e+f*)}]_{c}(CH₂)_{b}⁻]^{(f+c•f*)+} (V),
dans laquelle 0 ≤ a ≤ 6 ; 0 ≤ b ≤ 1 ; 0 ≤ c ≤ 1 ; 0 ≤ d ≤ 2 ; 0 ≤ e ≤ 1 ; 0 ≤ f ≤ 1 ; 0 ≤ f* ≤ 1,
A et A¹ représentent un radical benzyle ou vinylbenzyle,
N représente azote et Z représente un radical acide inorganique ou organique, monovalent,
R¹, R^{1*} et R^{1**} représentant un radical méthyle ou éthyle et
R² représentant un radical alkyle linéaire, cyclique ou ramifié comprenant 1 à 6 atomes de carbone ou un groupe uréidoalkyle de formule générale VI
NH₂-CO-NH-(CH₂)_{b}- (VI)
et y valant 0 à 1, le séchage des fibres lignocellulosiques à une température supérieure à 80°C et
le mélange avec un matériau synthétique thermoplastique au-dessus de la température de fusion du matériau synthétique thermoplastique.

11. Utilisation d'un organopolysiloxane dans une composition aqueuse pour la préparation d'un matériau composite selon l'une quelconque des revendications 1 à 6, pouvant être obtenu par mélange d'un aminoalkylalcoxysilane soluble dans l'eau de formule générale I,
R-Si(R¹)_{y}(OR^{1*})_{3-y} (I)
avec un alkyltrialcoxysilane insoluble dans l'eau de formule générale II
R²-Si(OR^{1**})₃ (II)
et/ou un dialkyldialcoxysilane insoluble dans l'eau de formule générale III
AA'-Si(OR^{1***}) ₂ (III),
R¹, R^{1*}, R1^{**} et R^{1***} représentant, indépendamment, un radical méthyle ou éthyle, R² représentant un radical alkyle linéaire, cyclique ou ramifié, comprenant 1 à 8 atomes de carbone, A représentant un radical alkyle non ramifié ou ramifié comprenant 1 à 3 atomes de carbone et A' représentant un radical alkyle non ramifié ou ramifié comprenant 1 à 3 atomes de carbone et y = 0 ou 1 et R représentant un groupes amino aromatique ou aliphatique primaire, secondaire, tertiaire, de préférence quaternaire.

12. Utilisation selon la revendication 11, pouvant être obtenu par mélange d'un aminoalkylalcoxysilane soluble dans l'eau de formule générale I,
R-Si(R¹)_{y}(OR^{1*})_{3-y} (I)
avec un alkyltrialcoxysilane insoluble dans l'eau de formule générale II
R²-Si(OR^{1**})₃ (II),
R représentant un groupe organique à fonctionnalité amino de formule générale V
[Z_{(f+c•f*)}]^{(f+c•f*)-}[A_{d}NH⁻_{(2+f-d)} [(CH₂)ₐNA¹ₑH⁻_{(1-e+f*)}]_{c}(CH₂)_{b}⁻]^{(f+c•f*)+} (V),
dans laquelle 0 ≤ a ≤ 6 ; 0 ≤ b ≤ 1 ; 0 ≤ c ≤ 1 ; 0 ≤ d ≤ 2 ; 0 ≤ e ≤ 1 ; 0 ≤ f ≤ 1 ; 0 ≤ f* ≤ 1,
A et A¹ représentent un radical benzyle ou vinylbenzyle,
N représente azote et Z représente un radical acide inorganique ou organique, monovalent,
R¹, R^{1*} et R^{1**} représentant un radical méthyle ou éthyle et
R² représentant un radical alkyle linéaire, cyclique ou ramifié comprenant 1 à 6 atomes de carbone ou un groupe uréidoalkyle de formule générale VI
NH₂-CO-NH-(CH₂)_{b}- (VI)
et y valant 0 à 1.
